# EUROPEAN PATENT APPLICATION

(11) **EP 4 760 882 A1**
(43) Date of publication of application: **17.06.2026**
(21) Application number: 25787055.0
(22) Date of filing: 28.03.2025
(51) Int. Cl.: H01M 10/6568, H01M 10/6556, H01M 10/613, H01M 10/643, H01M 10/625, H01M 50/291, H01M 50/204, H01M 50/249

(54) **BATTERY PACK AND VEHICLE INCLUDING SAME**

(30) Priority: 12.04.2024 KR 20240049294; 11.02.2025 KR 20250017546
(71) Applicant: LG Energy Solution, Ltd., Seoul 07335 (KR)
(72) Inventor: CHOI, Seung-Bin, Daejeon 34122 (KR); JUNG, Min-Yong, Daejeon 34122 (KR); CHOI, Bum, Daejeon 34122 (KR); PARK, Jong-Hee, Daejeon 34122 (KR); CHUNG, Jae-Heon, Daejeon 34122 (KR)
(74) Representative: Plasseraud IP
(86) International application number: PCT/KR2025/004096
(87) International publication number: WO 2025/216463

(57) **Abstract**

Disclosed is a battery pack and a vehicle including the same. The battery pack includes a plurality of battery cell; a frame configured to accommodate the plurality of battery cells and having at least one inlet for introducing a cooling medium and at least one outlet for discharging the cooling medium; a pack case configured to accommodate the frame and configured to allow the cooling medium to move; and a partition member installed inside the pack case and configured to partition a portion where the inlet is located and a portion where the outlet is located, the partition member having at least one movement hole through which the cooling medium moves.

## Description

### TECHNICAL FIELD

This application is based on and claims priority from Korean Patent Application No. 10-2024-0049294, filed on April 12, 2024, and Korean Patent Application No. 10-2025-0017546, filed on February 11, 2025, with the Korean Intellectual Property Office, the disclosure of which is incorporated herein in its entirety by reference.

The present disclosure relates to a battery pack and a vehicle including the same, and more specifically, to a battery pack capable of efficient cooling, and a vehicle including the same.

### BACKGROUND ART

Secondary batteries, which have high applicability according to product group and electrical characteristics such as high energy density, are widely applied not only to portable devices but also to electric vehicles (EV) and hybrid electric vehicles (HEV) driven by an electric drive source.

These secondary batteries are attracting attention as a new energy source for environmental friendliness and energy efficiency because they not only have the primary advantage of being able to drastically reduce the use of fossil fuels, but also have the advantage of not generating any by-products from energy use.

Types of secondary batteries widely used today include lithium-ion batteries, lithium polymer batteries, nickel-cadmium batteries, nickel-hydrogen batteries, and nickel-zinc batteries. The operating voltage of the unit secondary battery cells is approximately 2.5 V to 4.5 V.

The lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

To prevent ignition due to overheating, conventionally, a separate heatsink is used to cool the battery cell. However, this method has a problem in that cooling efficiency is low because heat is transferred through the heatsink.

Meanwhile, there is a conventional method in which cooling water is directly introduced to the battery cell. In this method, the cooling water introduced from the inlet is circulated while cooling the battery cell, and then discharged through the outlet. However, in this case, there is a problem in that the temperature difference increases between the battery cell located at the inlet and the battery cell located at the outlet.

That is, the temperature of the battery cell in contact with the cooling water at the relatively low-temperature inlet is low. However, as the cooling water circulates and cools the battery cell, the temperature of the cooling water rises.

As a result, the cooling water at the outlet has relatively high temperature, and the temperature of the battery cell in contact with the relatively high temperature cooling water at the outlet is higher than the temperature of the battery cell at the inlet.

When a temperature deviation occurs between battery cells in this way, if the temperature difference is excessive or continues for a long time, lithium is precipitated from the battery cell, the lifespan of the battery cell is reduced, and thus there is a problem in that the performance of not only the battery cell but also the battery module or battery pack deteriorates.

### DISCLOSURE

### Technical Problem

Therefore, the present disclosure is directed to providing a battery pack capable of reducing the temperature deviation of an entire plurality of battery cells through uniform cooling, and a vehicle including the same.

In addition, the present disclosure is directed to providing a battery pack capable of preventing lithium precipitation from a battery cell and preventing a decrease in lifespan, and a vehicle including the same.

In addition, the present disclosure is directed to providing a battery pack, which enable direct cooling by immersing the battery cell in a cooling medium, thereby improving cooling efficiency, and a vehicle including the same.

In addition, the present disclosure is directed to providing a battery pack, which may simplify the structure for cooling by removing a heatsink, and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery cell; a frame configured to accommodate the plurality of battery cells and having at least one inlet for introducing a cooling medium and at least one outlet for discharging the cooling medium; a pack case configured to accommodate the frame and configured to allow the cooling medium to move; and a partition member installed inside the pack case and configured to partition a portion where the inlet is located and a portion where the outlet is located, the partition member having at least one movement hole through which the cooling medium moves.

In an embodiment, the frame may include a side frame, and the partition member may be installed in a horizontal direction at a center based on a height of the side frame.

In an embodiment, the inlet may formed in the side frame at a lower position than the partition member, or the inlet may be formed in the side frame at a higher position than the partition member.

In an embodiment, when the inlet is formed in the side frame at a lower position than the partition member, the outlet may be formed in the side frame at a higher position than the partition member, and when the inlet is formed in the side frame at a higher position than the partition member, the outlet may be formed in the side frame at a lower position than the partition member.

In an embodiment, the side frame may include a first side frame and a second side frame positioned to face each other, the inlet may be formed in the first side frame, and the outlet may be formed in the second side frame.

In an embodiment, the partition member may have at least one insert hole into which the battery cell is inserted, and the movement hole may be positioned close to the insert hole.

In an embodiment, the movement hole may be provided in plurality so that the plurality of movement holes are arranged at preset intervals along a periphery of the insert hole.

In an embodiment, the cooling medium that flows into the frame through the inlet may move from a lower side of the partition member to an upper side of the partition member through the movement hole of the partition member and then flow out of the frame through the outlet, or the cooling medium that flows into the frame through the inlet may move from an upper side of the partition member to a lower side of the partition member through the movement hole of the partition member and then flows out of the frame through the outlet.

**In** an embodiment, the battery cell may be a cylindrical battery cell, and the cylindrical battery cell may be inserted into the insert hole.

**In** an embodiment, the cooling medium may be a cooling water or a cooling oil.

**In** an embodiment, the pack case may include a side pack case, and the side pack case may have a cooling medium moving channel through which the cooling medium moves.

**In** an embodiment, the cooling medium moving channel may include a lower channel formed at a lower side; an upper channel formed at an upper side of the lower channel; and a channel separating portion separating the lower channel and the upper channel.

**In** an embodiment, a lower opening communicating with the inlet may be formed in the lower channel, and an upper opening communicating with the outlet may be formed in the upper channel, or a lower opening communicating with the outlet may be formed in the lower channel, and an upper opening communicating with the inlet is formed in the upper channel.

**In** an embodiment, when the inlet is formed in the side frame at a higher position than the partition member, the movement hole may be configured to have a size increasing as being further away from the inlet.

**In** an embodiment, the battery pack may further comprise a power source that circulates the cooling medium.

Meanwhile, according to another aspect of the present disclosure, there may be provided a vehicle including the battery pack described above.

### Advantageous Effects

The embodiments of the present disclosure have the effect of reducing the temperature deviation of all of the plurality of battery cells through uniform cooling.

In addition, the present disclosure has the effect of preventing lithium precipitation from the battery cell and preventing reduction in lifespan.

In addition, the present disclosure enables direct cooling by immersing the battery cell in a cooling medium, which has the effect of improving cooling efficiency.

In addition, the present disclosure has the effect of simplifying the structure for cooling by removing the heatsink.

However, the effects that can be obtained through the present disclosure are not limited to the above, and other effects not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view showing a battery pack according to the first embodiment of the present disclosure in an assembled state.
FIG. 2 is an exploded perspective view showing the battery pack according to the first embodiment of the present disclosure.
FIG. 3 is a cross-sectional view, taken along line A-A' of FIG. 1.
FIG. 4 is an exploded perspective view showing a battery cell and a frame, observed along arrow B in FIG. 2.
FIG. 5 is an exploded perspective view showing the battery cell and the frame, observed along arrow C in FIG. 2.
FIG. 6 is a perspective view showing that some battery cells are coupled to the frame in FIG. 4.
FIG. 7 is a plan view showing that the battery cell is coupled to the frame in the battery pack according to the first embodiment of the present disclosure.
FIG. 8 is a drawing showing that a lower opening is formed in a side pack case in the battery pack according to the first embodiment of the present disclosure.
FIG. 9 is a drawing showing that an upper opening is formed in the side pack case in the battery pack according to the first embodiment of the present disclosure.
FIG. 10 is a drawing showing a cooling medium moving channel formed in the side pack case in the battery pack according to the first embodiment of the present disclosure.
FIG. 11 is a schematic perspective view showing a battery pack according to the second embodiment of the present disclosure.
FIG. 12 is an exploded perspective view showing a battery pack according to the second embodiment of the present disclosure.
FIG. 13 is a cross-sectional view taken along line F-F' of FIG. 11.
FIG. 14 is an exploded perspective view showing a battery cell and a frame taken along arrow G of FIG. 12.
FIG. 15 is an exploded perspective view showing a battery cell and a frame taken along arrow H of FIG. 12.
FIG. 16 is a perspective view showing some battery cells coupled to a frame in FIG. 14.
FIG. 17 is a plan view showing a battery pack according to the second embodiment of the present disclosure in which a battery cell is coupled to a frame.
FIG. 18 is a drawing showing a battery pack according to the second embodiment of the present disclosure in which a lower opening is formed in a side pack case.
FIG. 19 is a drawing showing a battery pack according to the second embodiment of the present disclosure in which an upper opening is formed in a side pack case.
FIG. 20 is a drawing showing a cooling medium moving channel formed in the side pack case in the battery pack according to the second embodiment of the present disclosure.
FIG. 21 is a drawing showing a modified example of a partition member in the battery pack according to the second embodiment of the present disclosure.
FIG. 22 is a drawing for explaining a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

Meanwhile, the common content described in one embodiment of the present disclosure can be applied to other embodiments. For example, the feature of the second embodiment common with the content described in the first embodiment can be replaced with the description of the first embodiment, but the common content can be applied to the second embodiment. In addition, the common content described in the second embodiment can be applied to the first embodiment. Also, the same applies to other embodiments.

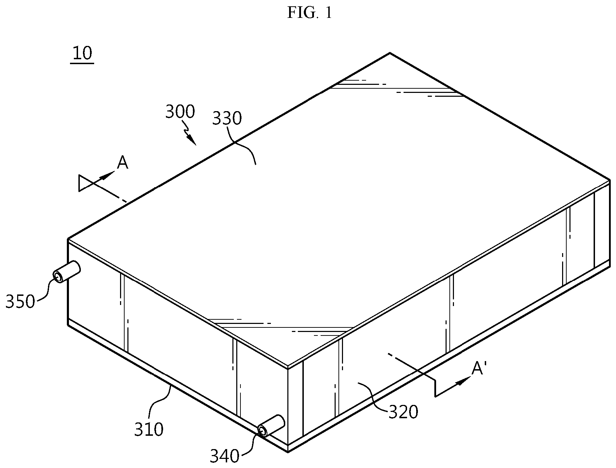

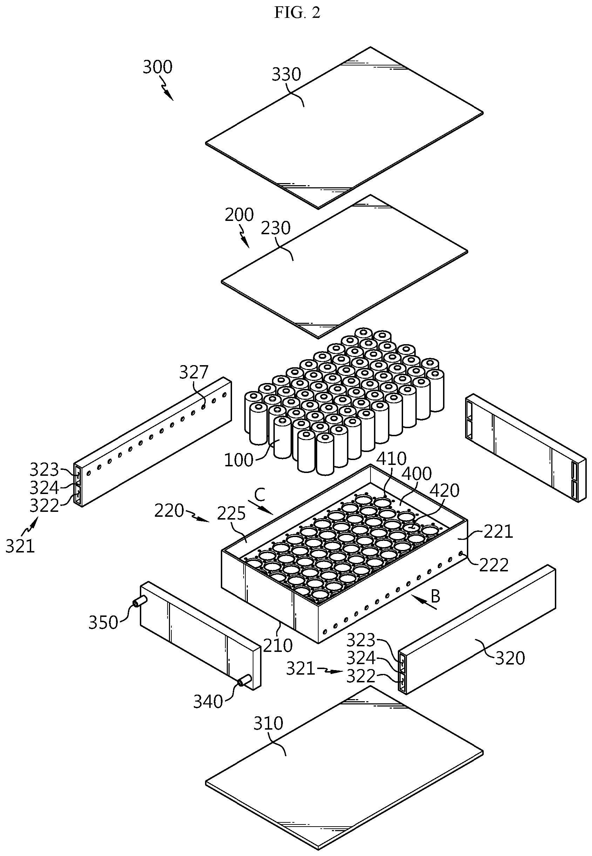

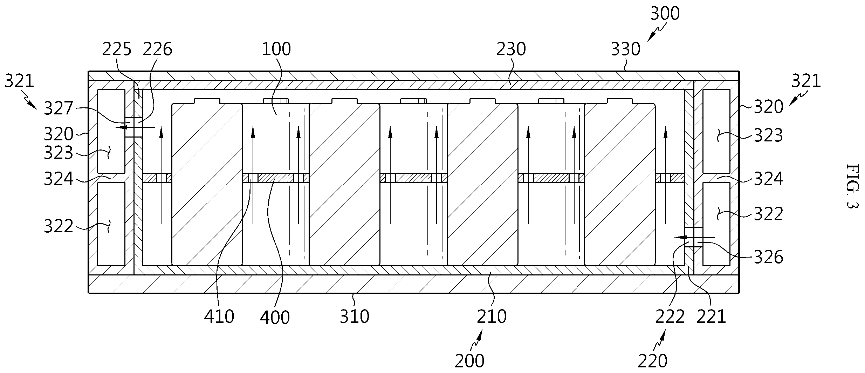

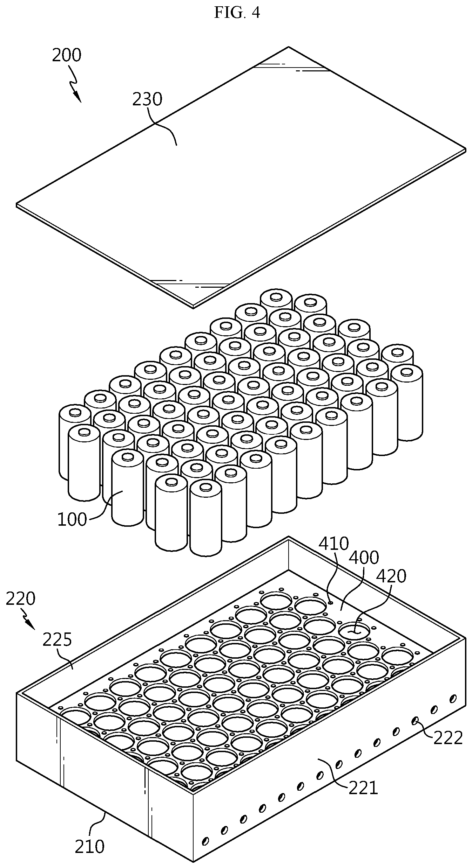

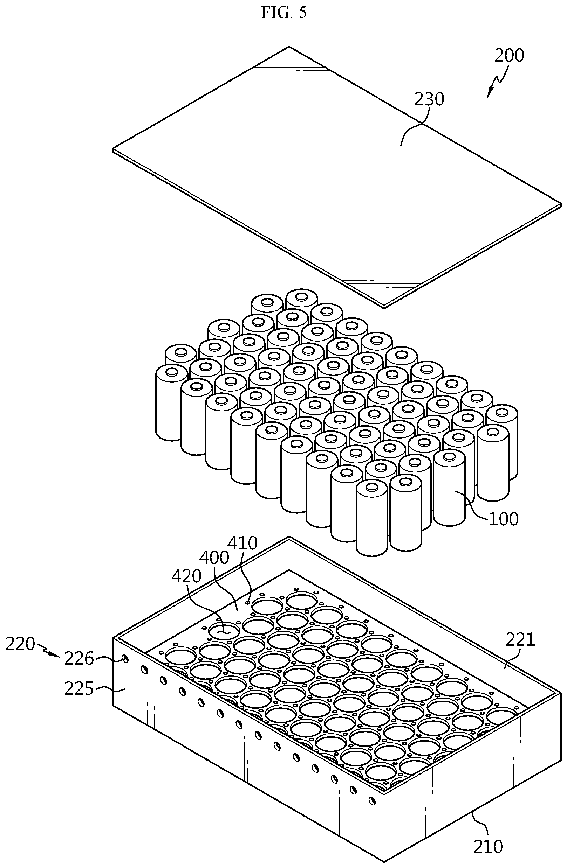

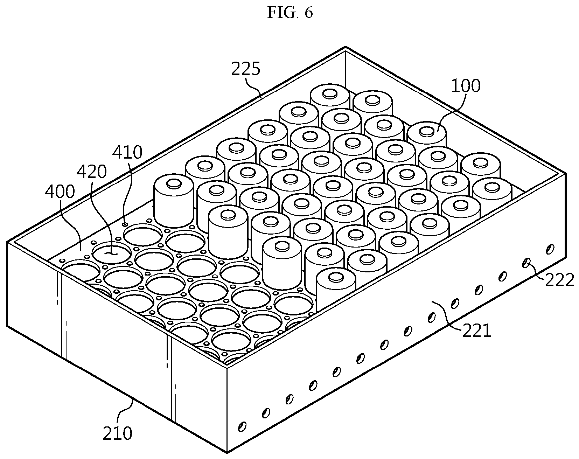

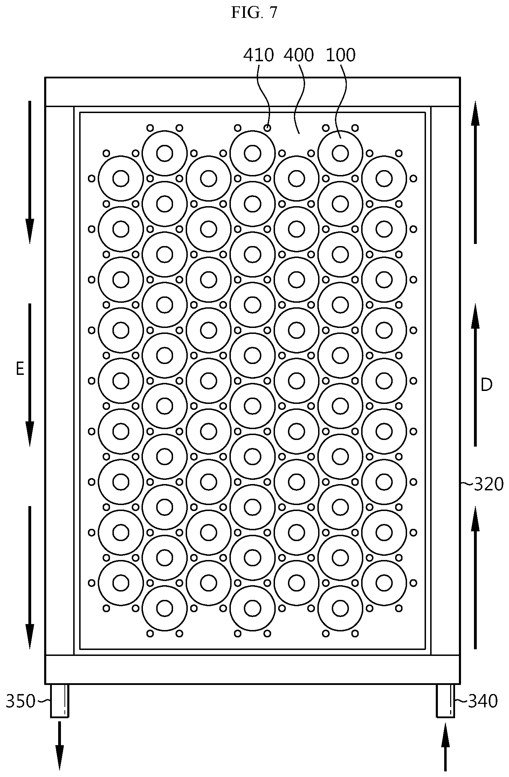

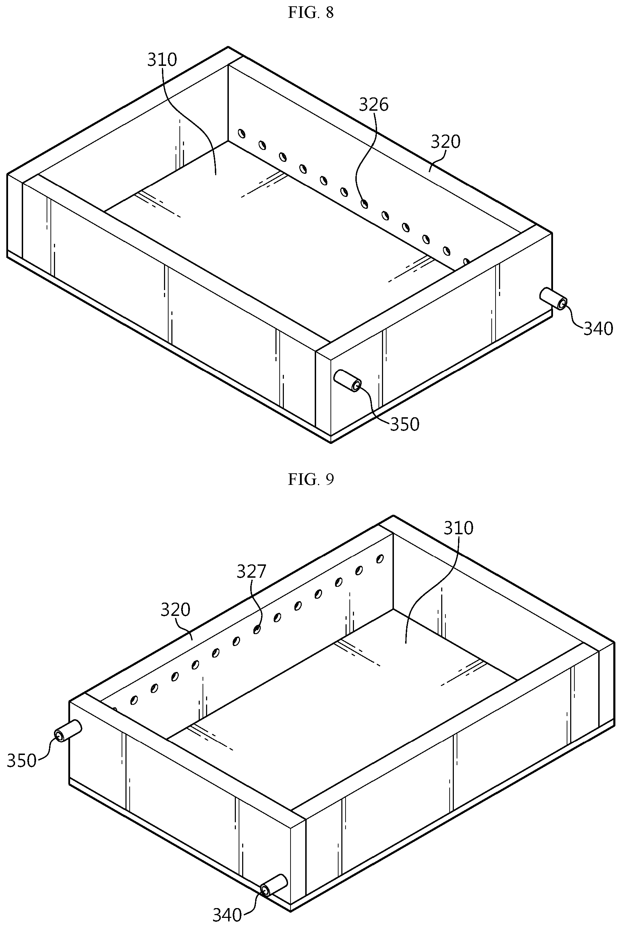

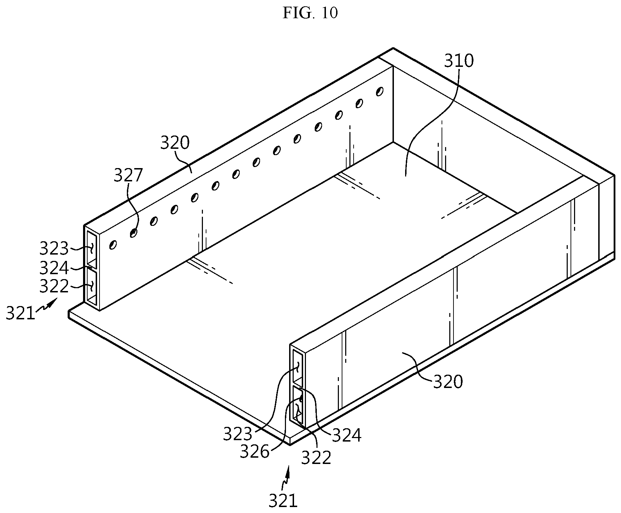

FIG. 1 is a schematic perspective view showing a battery pack according to an embodiment of the present disclosure in an assembled state, FIG. 2 is an exploded perspective view showing the battery pack according to an embodiment of the present disclosure, FIG. 3 is a cross-sectional view, taken along line A-A' of FIG. 1, FIG. 4 is an exploded perspective view showing a battery cell and a frame, observed along arrow B in FIG. 2, FIG. 5 is an exploded perspective view showing the battery cell and the frame, observed along arrow C in FIG. 2, FIG. 6 is a perspective view showing that some battery cells are coupled to the frame in FIG. 4, FIG. 7 is a plan view showing that the battery cell is coupled to the frame in the battery pack according to an embodiment of the present disclosure, FIG. 8 is a drawing showing that a lower opening is formed in a side pack case in the battery pack according to an embodiment of the present disclosure, FIG. 9 is a drawing showing that an upper opening is formed in the side pack case in the battery pack according to an embodiment of the present disclosure, and FIG. 10 is a drawing showing a cooling medium moving channel formed in the side pack case in the battery pack according to an embodiment of the present disclosure.

Referring to FIGS. 1 to 3, a battery pack 10 according to an embodiment of the present disclosure includes a battery cell 100, a frame 200, a pack case 300, and a partition member 400.

The battery cell 100 may be accommodated in the frame 200. Here, the battery cell 100 accommodated in the frame 200 may include various types. For example, the battery cell 100 may include a pouch-type battery cell 100, a rectangular battery cell 100, or a cylindrical battery cell 100. However, for the convenience of explanation, the battery cell 100 will be described as having a cylindrical shape, as in FIG. 2.

The cylindrical battery cell 100 may include an electrode assembly, a battery can, a positive electrode current collection plate, a cell terminal, and a negative electrode current collection plate.

The electrode assembly has a structure in which a positive electrode plate, a negative electrode plate, and a separator interposed between the positive electrode plate and the negative electrode plate are wound in one direction, and is formed in a jellyroll type with a center hole formed therein. For example, the electrode assembly may be manufactured by winding a stack that is formed by sequentially stacking a negative electrode plate, a separator, a positive electrode plate, and a separator at least once.

**In** addition, the center hole of the electrode assembly is also used for welding the cell terminal and the positive electrode current collection plate. That is, a laser may be irradiated through the center hole of the electrode assembly to weld the cell terminal and the positive electrode current collection plate.

The positive electrode plate and the negative electrode plate may be formed in a sheet shape. The positive electrode plate has a positive electrode active material coated on one or both surfaces thereof, and a first uncoated portion on which the positive electrode active material is not coated may exist at an end of the positive electrode plate. The negative electrode plate has a negative electrode active material coated on one or both surfaces thereof, and a second uncoated portion on which the negative electrode active material is not coated may exist at an end of the negative electrode plate.

That is, at least one of the positive electrode plate and the negative electrode plate may include an uncoated portion, in which the active material is not coated at the longitudinal end in the winding direction. The uncoated portion may be exposed to the outside of the separator while forming a plurality of winding turns based on the center of the electrode assembly, and may be used as an electrode tab by itself.

Here, the first uncoated portion and the second uncoated portion may be configured to face opposite directions. However, the electrode assembly may not have the uncoated portion. In addition, the positive electrode active material coated on the positive electrode plate and the negative electrode active material coated on the negative electrode plate may be used without limitation as long as they are active materials known in the art.

The separator may use a porous polymer film, for example, a porous polymer film made of a polyolefin polymer such as an ethylene homopolymer, a propylene homopolymer, an ethylene/butene copolymer, an ethylene/hexene copolymer, an ethylene/methacrylate copolymer, etc., alone or in combination.

As another example, the separator may use a common porous nonwoven fabric, such as a nonwoven fabric made of high-melting-point glass fiber, polyethylene terephthalate fiber, etc. At least one surface of the separator may include a coating layer of inorganic particles.

It is also possible that the separator itself is formed as a coating layer of inorganic particles. The particles forming the coating layer may have a structure in which they are coupled with a binder so that an interstitial volume exists between adjacent particles.

The electrode assembly is accommodated in the battery can, and a through hole may be formed in the battery can. For example, the battery can is formed in a cylindrical shape so that the electrode assembly is accommodated inside the battery can, and the battery can may be electrically connected to the negative electrode plate of the electrode assembly. Accordingly, the battery can may have the same polarity as the negative electrode plate, i.e., a negative polarity.

The positive electrode current collection plate is electrically connected to the positive electrode plate, and, for example, is connected to the positive electrode plate at the top of the electrode assembly. For example, the positive electrode current collection plate is made of a conductive metal material and may be electrically connected to the first uncoated portion of the positive electrode plate.

The cell terminal is made of a conductive metal material and is electrically connected to the positive electrode current collection plate through the through hole of the battery can. In addition, the cell terminal is electrically connected to the positive electrode plate of the electrode assembly through the positive electrode current collection plate, thereby having a positive polarity.

The negative electrode current collection plate is electrically connected to the negative electrode plate, and for example, is connected to the negative electrode plate at the bottom of the electrode assembly. For example, the negative electrode current collection plate is made of a conductive metal material such as aluminum, steel, copper, nickel, etc., and may be electrically connected to the second uncoated portion of the negative electrode plate.

The plurality of battery cells 100 are accommodated in frame 200. The frame 200 may be configured in various ways to protect the plurality of battery cells 100. For example, the frame 200 may be a module case of a battery module in which the plurality of battery cells 100 are accommodated, but is not limited thereto.

Referring to FIGS. 2, 3, and 4, at least one inlet 222 through which a cooling medium is introduced is formed in the frame 200. Also, referring to FIGS. 3 and 5, at least one outlet 226 through which a cooling medium is discharged is formed in the frame 200. Here, the cooling medium may be various, and may be, for example, a cooling water or a cooling oil, but is not limited thereto. Also, although not illustrated in the drawings, various types of power sources for circulating the cooling medium may be coupled.

Referring to FIGS. 2 and 3, the frame 200 may include a lower frame 210, a side frame 220, and an upper frame 230.

The lower frame 210 is coupled to the lower portion of the side frame 220. In addition, the battery cell 100 is mounted on the lower frame 210. That is, the plurality of battery cells 100 may be supported by the lower frame 210. The lower frame 210 may have various shapes, for example a rectangular plate shape, but is not limited thereto.

The side frame 220 may include a first side frame 221 and a second side frame 225 positioned to face each other. Here, the inlet 222 may be formed in the first side frame 221, and the outlet 226 may be formed in the second side frame 225. Of course, the inlet 222 may be formed in the second side frame 225, and the outlet 226 may be formed in the first side frame 221, but for convenience of explanation, the following first embodiment will focus on the case where the inlet 222 is formed in the first side frame 221, and the outlet 226 is formed in the second side frame 225.

Referring to FIGS. 3 and 4, the inlet 222 may be formed in the first side frame 221 at a lower position than the partition member 400, explained later. Also, referring to FIGS. 3 and 5, the outlet 226 may be formed in the second side frame 225 at a higher position than the partition member 400, explained later.

In addition, as a modified example for FIG. 3, the inlet 222 may be formed at a higher position than the partition member 400, and the outlet 226 may be formed at a lower position than the partition member 400, but this will be described in the second embodiment.

The upper frame 230 is coupled to the upper portion of the side frame 220. The upper frame 230 may have various shapes, for example a rectangular plate shape, but is not limited thereto.

Referring to FIGS. 2 and 3, the frame 200 in which the battery cells 100 are accommodated is accommodated in the pack case 300.

**In** addition, the pack case 300 is configured to allow the cooling medium to move. Here, the cooling medium may move in various ways in the pack case 300. For example, the cooling medium may flow from the pack case 300 to the frame 200, or the cooling medium may flow out from the frame 200, and the cooling medium may move through a cooling medium moving channel 321 formed in the pack case 300.

The pack case 300 may be configured to include, for example, a lower pack case 310, a side pack case 320, and an upper pack case 330.

The lower pack case 310 may be formed in a rectangular plate shape, but is not limited thereto. The lower pack case 310 is configured such that at least one frame 200 is mounted thereto. In FIG. 2, one frame 200 is illustrated, but the number of frames 200 is not limited thereto and the frame 200 may be provided in plurality. In addition, the lower pack case 310 forms a bottom portion of the pack case 300.

The side pack case 320 may be configured to extend upward from an edge of the lower pack case 310. The side pack case 320 defines the height of the pack case 300 and forms a preset space between the side pack case 320 and the lower pack case 310.

At least one frame 200 is mounted in the space between the side pack case 320 and the lower pack case 310. The side pack case 320 may include a relatively long side frame 220 and a relatively short side frame 220. Alternatively, the side pack case 320 may include side frames 220 having the same length.

Referring to FIGS. 3 and 10, a cooling medium moving channel 321 through which a cooling medium moves may be formed in the side pack case 320. The cooling medium moving channel 321 may include a lower channel 322, an upper channel 323, and a channel separating portion 324.

The lower channel 322 is formed at the lower side of the upper channel 323. Referring to FIGS. 3 and 8 together, a lower opening 326 is formed in the lower channel 322 that communicates with the inlet 222. That is, the cooling medium supplied from the supply port 340 to the lower channel 322 moves along the lower channel 322 and moves into the frame 200 through the lower opening 326 and the inlet 222.

In addition, the cooling medium that has moved into the frame 200 through the lower opening 326 and the inlet 222 moves upward through the movement hole 410 of the partition member 400.

The upper channel 323 is formed at the upper side of the lower channel 322. In addition, referring to FIGS. 3 and 9 together, an upper opening 327 is formed in the upper channel 323 that communicates with the outlet 226. That is, a cooling medium that moves from the inside of the frame 200 to the upper channel 323 through the outlet 226 of the frame 200 and the upper opening 327 moves along the upper channel 323 and is discharged to the outside through the discharge port 350.

The channel separating portion 324 is configured to separate the lower channel 322 and the upper channel 323. The channel separating portion 324 may be manufactured integrally with the lower channel 322 and the upper channel 323, or may be manufactured separately and then coupled. The cooling medium moving channel 321 may be separated into the lower channel 322 and the upper channel 323 by the channel separating portion 324.

The upper pack case 330 is coupled to the side pack case 320. The upper pack case 330 may be formed in a rectangular plate shape, but is not limited thereto.

Referring to FIG. 3, the partition member 400 is installed inside the pack case 300 to partition the portion where the inlet 222 is located and the portion where the outlet 226 is located. In addition, at least one movement hole 410 through which a cooling medium moves is formed in the partition member 400.

The partition member 400 may be installed in a horizontal direction at the center based on the height of the side frame 220. The partition member 400 does not necessarily have to be installed at the exact center of the side frame 220, and the installation height of the partition member 400 may be appropriately adjusted as needed.

In addition, referring to FIG. 3, as described above, the inlet 222 may be formed in the first side frame 221 at a position lower than the partition member 400, and the outlet 226 may be formed in the second side frame 225 at a position higher than the partition member 400. With this structure, the cooling medium introduced through the inlet 222 of the first side frame 221 moves upward through the movement hole 410 of the partition member 400 and flows out through the outlet 226 of the second side frame 225.

Referring to FIG. 6, at least one insert hole 420 into which the battery cell 100 is inserted is formed in the partition member 400, and the movement hole 410 may be positioned close to the insert hole 420. That is, when the battery cell 100 is a cylindrical battery cell 100, the cylindrical battery cell 100 may be inserted into the insert hole 420. Here, a plurality of movement holes 410 may be arranged at preset intervals along the periphery of the insert hole 420.

Referring to FIGS. 1 and 10 together, a cooling medium is supplied to the lower channel 322 of the cooling medium moving channel 321 through the supply port 340. Also, the cooling medium moves along the lower channel 322 in the direction of arrow D of FIG. 7.

In addition, referring to FIG. 3, a cooling medium is introduced into the frame 200 from the lower channel 322 through the lower opening 326 formed in the lower channel 322 and the inlet 222 of the first side frame 221 communicating with the lower opening 326.

Here, the cooling medium that flows into the frame 200 through the inlet 222 fills the lower side of the frame 200 and the water level rises. At this time, since the cooling medium is filled from the lower side to the upper side of the frame 200, all battery cells 100 come into contact with the cooling medium at the same time.

In addition, the cooling medium rises from the lower side of the partition member 400 and moves to the upper side of the partition member 400 through the movement hole 410 of the partition member 400 (see arrow in FIG. 3) to fill the upper side of the frame 200.

Here, when the cooling medium fills the upper side of the frame 200, the cooling medium flows out of the frame 200 while moving to the upper channel 323 through the outlet 226 formed in the second side frame 225 and the upper opening 327 communicating with the outlet 226.

In addition, the cooling medium moves in the direction of arrow E in FIG. 7 along the upper channel 323 and is discharged through the discharge port 350.

Since the plurality of battery cells 100 accommodated in the frame 200 come into contact with the cooling medium at the same time as described above, the temperature deviation between the battery cells 100 is reduced, thereby enabling uniform cooling.

In addition, lithium precipitation from the battery cell 100 may be prevented through uniform cooling, thereby preventing a decrease in lifespan.

Also, direct cooling is possible by immersing the battery cells 100 in the cooling medium without a heatsink, thereby improving cooling efficiency.

Also, the structure for cooling may be simplified by removing the heatsink.

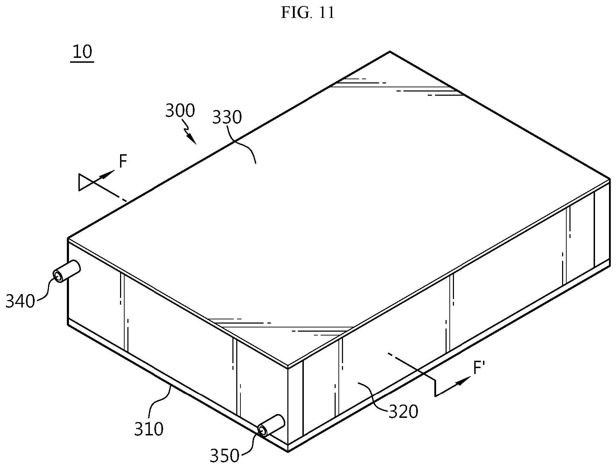

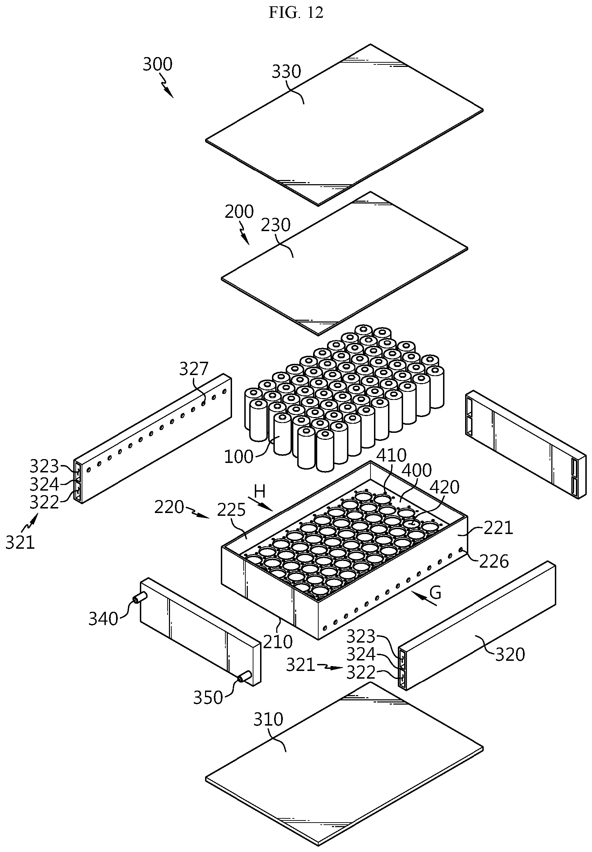

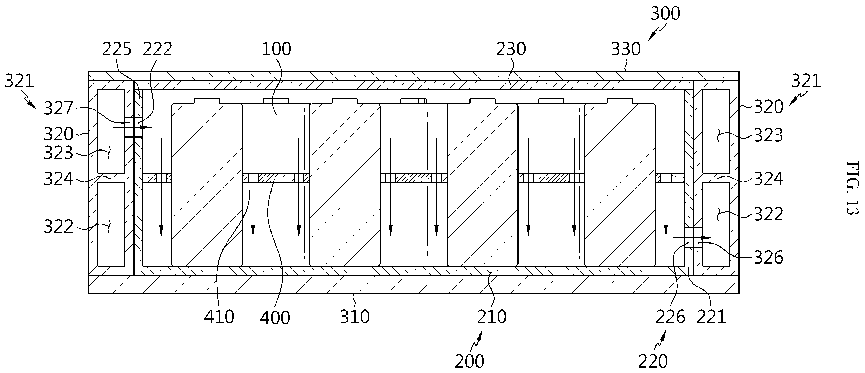

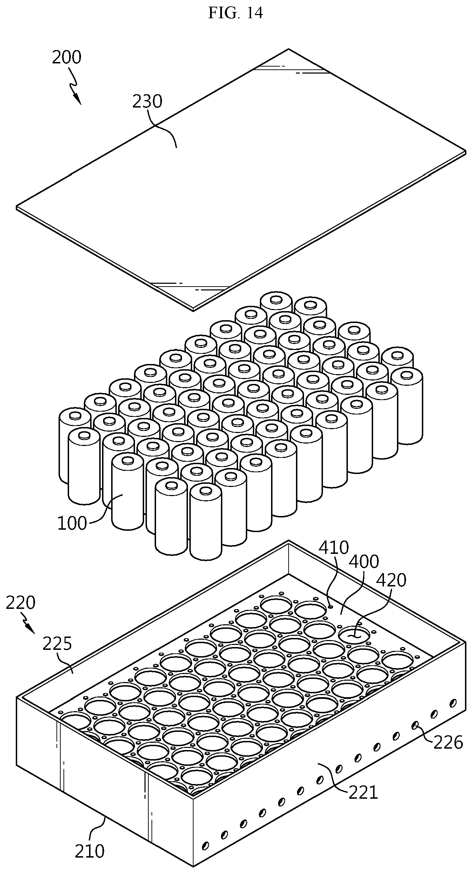

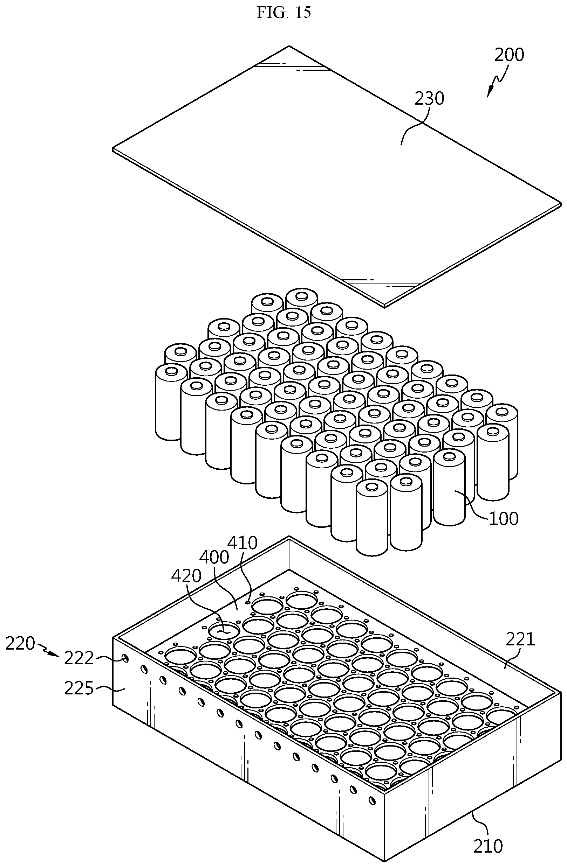

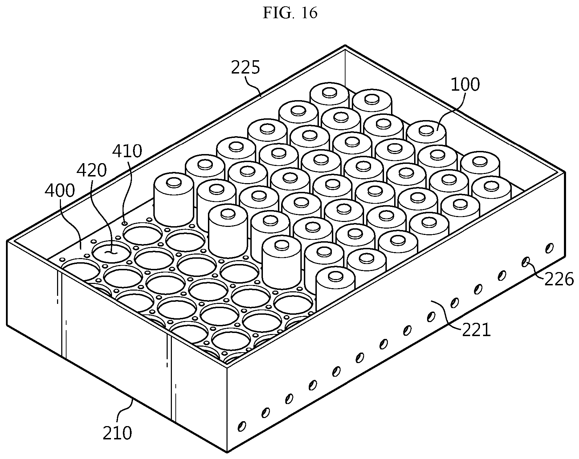

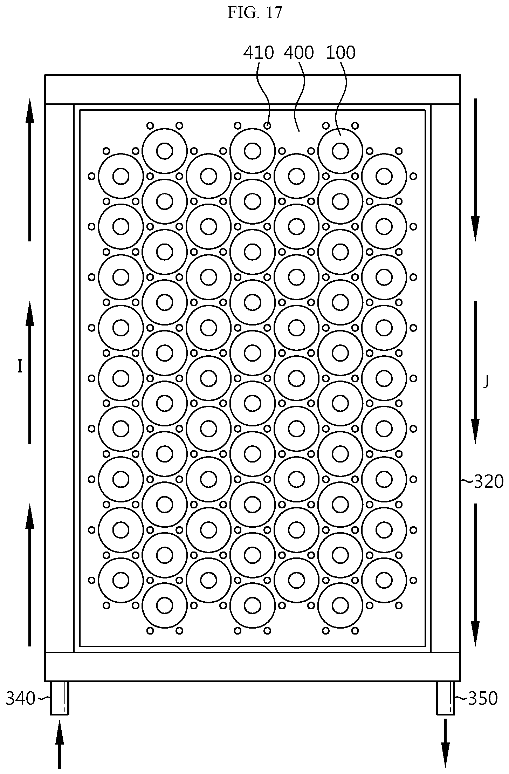

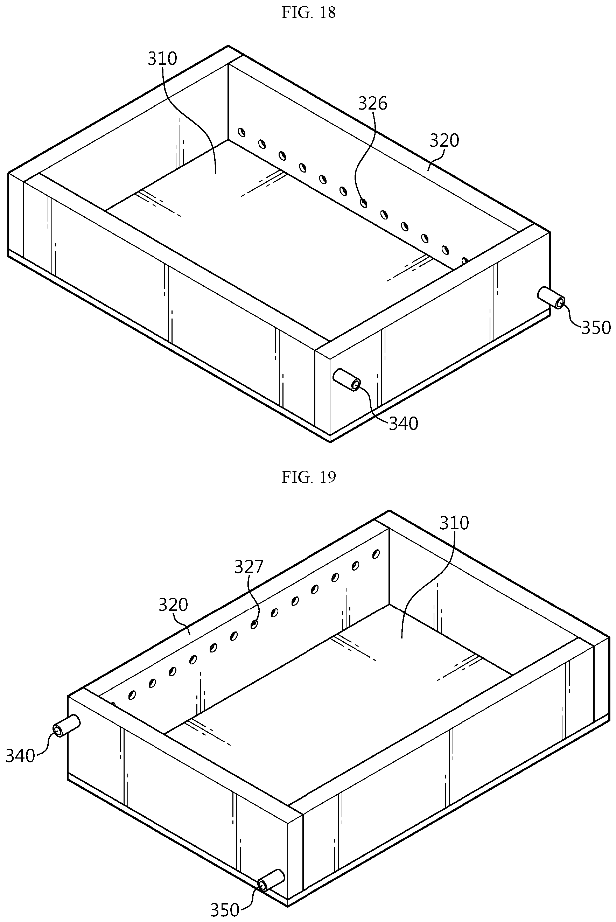

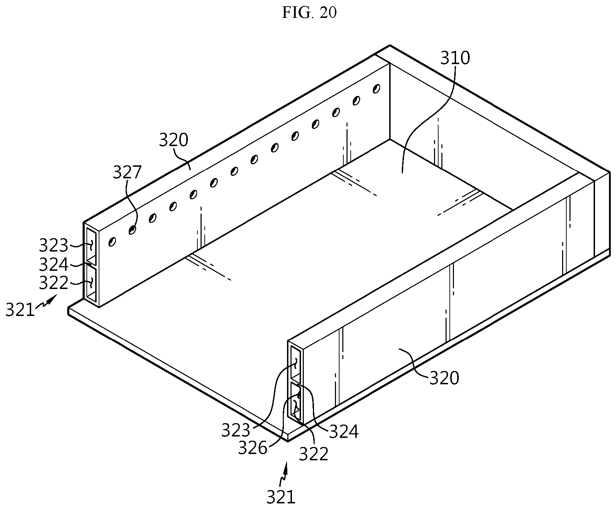

FIG. 11 is a schematic perspective view showing a battery pack according to the second embodiment of the present disclosure, FIG. 12 is an exploded perspective view showing a battery pack according to the second embodiment of the present disclosure, FIG. 13 is a cross-sectional view taken along line F-F' of FIG. 11, FIG. 14 is an exploded perspective view showing a battery cell and a frame taken along arrow G of FIG. 12, FIG. 15 is an exploded perspective view showing a battery cell and a frame taken along arrow H of FIG. 12, FIG. 16 is a perspective view showing some battery cells coupled to a frame in FIG. 14, FIG. 17 is a plan view showing a battery pack according to the second embodiment of the present disclosure in which a battery cell is coupled to a frame, FIG. 18 is a drawing showing a battery pack according to the second embodiment of the present disclosure in which a lower opening is formed in a side pack case, FIG. 19 is a drawing showing a battery pack according to the second embodiment of the present disclosure in which an upper opening is formed in a side pack case, and FIG. 20 is a drawing showing a cooling medium moving channel formed in the side pack case in the battery pack according to the second embodiment of the present disclosure.

Referring to FIGS. 13 to 15, the inlet 222 may be formed in the second side frame 225, and the outlet 226 may be formed in the first side frame 221. Of course, the inlet 222 may be formed in the first side frame 221, and the outlet 226 may be formed in the second side frame 225, but for convenience of explanation, the following second embodiment will focus on the case where the inlet 222 is formed in the second side frame 225, and the outlet 226 is formed in the first side frame 221.

Referring to FIGS. 13 and 14, the outlet 226 may be formed in the first side frame 221 at a lower position than the partition member 400. Also, referring to FIGS. 13 and 15, the inlet 222 may be formed in the second side frame 225 at a higher position than the partition member 400.

Referring to FIG. 13 and FIG. 19 together, an upper opening 327 communicating with the inlet 222is formed in the upper channel 323. That is, the cooling medium supplied from the supply port 340 to the upper channel 323 moves along the upper channel 323 and moves into the frame 200 through the upper opening 327 and the inlet 222.

In addition, the cooling medium that has moved into the frame 200 through the upper opening 327 and the inlet 222 moves downward through the movement hole 410 of the partition member 400.

Referring to FIG. 13 and FIG. 18 together, a lower opening 326 communicating with the outlet 226 is formed in the lower channel 322. That is, the cooling medium that has moved from the inside of the frame 200 to the lower channel 322 through the outlet 226 of the frame 200 and the lower opening 326 moves along the lower channel 322 and is discharged to the outside through the discharge port 350.

Referring to FIG. 13, the partition member 400 is installed inside the pack case 300 to divide a portion where the inlet 222 is located and a portion where the outlet 226 is located. In addition, at least one movement hole 410 through which a cooling medium moves is formed in the partition member 400.

In addition, referring to FIG. 13 again, as described above, the inlet 222 may be formed in the second side frame 225 at a higher position than the partition member 400, and the outlet 226 may be formed in the first side frame 221 at a lower position than the partition member 400.

Due to this structure, as shown in FIG. 13, the cooling medium introduced through the inlet 222 of the second side frame 225 moves downward through the movement hole 410 of the partition member 400 and flows out through the outlet 226 of the first side frame 221.

Referring to FIG. 11 and FIG. 20 together, the cooling medium is supplied to the upper channel 323 of the cooling medium moving channel 321 through the supply port 340. Also, the cooling medium moves along the upper channel 323 in the direction of arrow I of FIG. 17.

In addition, referring to FIG. 13, the cooling medium is introduced into the frame 200 from the upper channel 323 through the upper opening 327 formed in the upper channel 323 and the inlet 222 of the second side frame 225 communicating with the upper opening 327.

Here, the cooling medium introduced into the frame 200 through the inlet 222 falls from the upper side to the lower side of the frame 200. Also, the cooling medium falls from the upper side to the lower side of the partition member 400 and then moves to the lower channel 322 through the outlet 226 formed in the first side frame 221 and the lower opening 326 communicating with the outlet 226, and flows out of the frame 200.

At this time, the cooling medium that has fallen from the upper side of the frame 200 to the lower side of the partition member 400 fills the lower side of the frame 200 before being discharged through the outlet 226, causing all battery cells 100 to come into contact with the cooling medium at the same time, thereby achieving uniform cooling for all battery cells 100.

In addition, the cooling medium moves in the direction of arrow J of FIG. 17 along the lower channel 322 and is discharged through the discharge port 350.

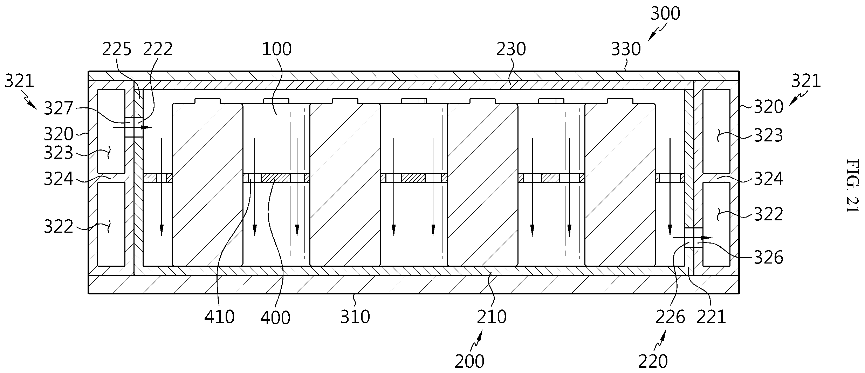

FIG. 21 is a drawing showing a modified example of a partition member in the battery pack according to the second embodiment of the present disclosure.

Referring to FIG. 21, there is a difference from FIG. 13 in that the size of the movement hole 410 is not constant. That is, in FIG. 13, the size of the movement hole 410 is constant overall, but referring to FIG. 21, the size of the movement hole 410 closer to the inlet 222 may be smallest, and the size of the movement hole 410 may increase as being further away from the inlet 222. In FIG. 21, the size of the movement hole 410 at the left side of FIG. 21 is smallest, and the size of the movement hole 410 increases as moving to the right.

By doing so, the cooling medium may uniformly fall from the upper side to the lower side of the partition member 400.

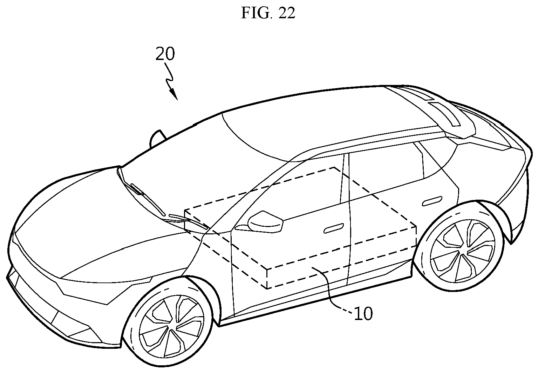

FIG. 22 is a drawing for explaining a vehicle including the battery pack according to an embodiment of the present disclosure.

Referring to FIG. 22, a vehicle 20 according to an embodiment of the present disclosure may include the battery pack 10 described above. That is, the battery pack 10 according to an embodiment of the present disclosure may be applied to the vehicle 20, for example, a predetermined vehicle configured to use electricity, such as an electric vehicle or a hybrid electric vehicle.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Also, although terms indicating directions such as upward, downward, left, and right are used in this specification, it is obvious to those skilled in the art that these terms are only for convenience of explanation and may vary depending on the location of the target object or the location of the observer.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery cell;
a frame configured to accommodate the plurality of battery cells and having at least one inlet for introducing a cooling medium and at least one outlet for discharging the cooling medium;
a pack case configured to accommodate the frame and configured to allow the cooling medium to move; and
a partition member installed inside the pack case and configured to partition a portion where the inlet is located and a portion where the outlet is located, the partition member having at least one movement hole through which the cooling medium moves.

2. The battery pack according to claim 1,
wherein the frame includes a side frame, and
wherein the partition member is installed in a horizontal direction at a center based on a height of the side frame.

3. The battery pack according to claim 2,
wherein the inlet is formed in the side frame at a lower position than the partition member, or
wherein the inlet is formed in the side frame at a higher position than the partition member.

4. The battery pack according to claim 3,
wherein when the inlet is formed in the side frame at a lower position than the partition member, the outlet is formed in the side frame at a higher position than the partition member, and
wherein when the inlet is formed in the side frame at a higher position than the partition member, the outlet is formed in the side frame at a lower position than the partition member.

5. The battery pack according to claim 2,
wherein the side frame includes a first side frame and a second side frame positioned to face each other, and
wherein the inlet is formed in the first side frame and the outlet is formed in the second side frame.

6. The battery pack according to claim 1,
wherein the partition member has at least one insert hole into which the battery cell is inserted, and
wherein the movement hole is positioned close to the insert hole.

7. The battery pack according to claim 6,
wherein the movement hole is provided in plurality so that the plurality of movement holes are arranged at preset intervals along a periphery of the insert hole.

8. The battery pack according to claim 6,
wherein the cooling medium that flows into the frame through the inlet moves from a lower side of the partition member to an upper side of the partition member through the movement hole of the partition member and then flows out of the frame through the outlet, or
wherein the cooling medium that flows into the frame through the inlet moves from an upper side of the partition member to a lower side of the partition member through the movement hole of the partition member and then flows out of the frame through the outlet.

9. The battery pack according to claim 6,
wherein the battery cell is a cylindrical battery cell, and
wherein the cylindrical battery cell is inserted into the insert hole.

10. The battery pack according to claim 1,
wherein the cooling medium is a cooling water or a cooling oil.

11. The battery pack according to claim 1,
wherein the pack case includes a side pack case, and
wherein the side pack case has a cooling medium moving channel through which the cooling medium moves.

12. The battery pack according to claim 11,
wherein the cooling medium moving channel includes:
a lower channel formed at a lower side;
an upper channel formed at an upper side of the lower channel; and
a channel separating portion separating the lower channel and the upper channel.

13. The battery pack according to claim 12,
wherein a lower opening communicating with the inlet is formed in the lower channel, and an upper opening communicating with the outlet is formed in the upper channel, or
wherein a lower opening communicating with the outlet is formed in the lower channel, and an upper opening communicating with the inlet is formed in the upper channel.

14. The battery pack according to claim 3,
wherein when the inlet is formed in the side frame at a higher position than the partition member, the movement hole is configured to have a size increasing as being further away from the inlet.

15. The battery pack according to claim 1, further comprising:
a power source that circulates the cooling medium.

16. A vehicle comprising at least one battery pack according to any one of claims 1 to 15.
